# EUROPÄISCHE PATENTSCHRIFT

(11) **EP 3 678 918 B1**
(45) Veröffentlichungstag und Bekanntmachung des Hinweises auf die Patenterteilung: **29.09.2021**
(21) Anmeldenummer: 18739827.6
(22) Anmeldetag: 05.07.2018
(51) Int. Cl.: B62D 5/00, B62D 5/04, B62D 6/00, B62D 15/02

(54) **STEER-BY-WIRE-SYSTEM UND VERFAHREN ZUM BETREIBEN EINES STEER-BY-WIRE-SYSTEMS**
STEER-BY-WIRE SYSTEM AND METHOD FOR OPERATING A STEER-BY-WIRE SYSTEM
SYSTÈME À COMMANDE ÉLECTRIQUE « STEER-BY-WIRE », ET PROCÉDÉ DE FONCTIONNEMENT D'UN SYSTÈME À COMMANDE ÉLECTRIQUE « STEER-BY-WIRE »

(30) Priorität: 05.09.2017 DE 102017215593
(43) Veröffentlichungstag der Anmeldung: 15.07.2020
(73) Patentinhaber: Volkswagen Aktiengesellschaft, 38440 Wolfsburg (DE)
(72) Erfinder: SCHÄFER, Johannes Maria, 39615 Werben OT Berge (DE)
(86) Internationale Anmeldenummer: PCT/EP2018/068254
(87) Internationale Veröffentlichungsnummer: WO 2019/048104

(56) Entgegenhaltungen:
- US-A1- 2006 047 391

## Beschreibung

Die Erfindung betrifft ein steer-by-wire-System und ein Verfahren zum Betreiben eines steer-by-wire-Systems.

Steer-by-wire-Systeme sind typischerweise dadurch gekennzeichnet, dass eine mit der Lenkhandhabe verbundene Eingangswelle keinen mechanischen Durchgriff mehr aufweist, beispielsweise zu einer die Lenkbewegung umsetzenden Zahnstange. Dadurch geht auch das haptische Feedback von der Straße auf die Lenkung zur Lenkhandhabe verloren. Daher ist es bekannt, einen Aktor zur Erzeugung eines Rückkopplungsmoments (z.B. ein Elektromotor) vorzusehen, der unter anderem in Abhängigkeit vom eingestellten Lenkwinkel ein Gegenmoment an der Lenkhandhabe erzeugt. Der Lenkwinkel wird dabei üblicherweise anhand einer Zahnstangenposition ermittelt.

Derartige steer-by-wire-Systeme sind beispielsweise aus der DE 103 31 700 A1 oder der DE 10 2004 001 318 A1 bekannt.

Aus der US 2006/0047391 A1 ist ein Steer-by-wire-System bekannt, umfassend eine Lenkhandhabe, einen Sensor zur Erfassung eines Fahrerwunsches, mindestens ein Lenkungssteuergerät, eine Leistungselektronik, einen elektrischen Servo-Motor, eine über den Servo-Motor bewegbare Zahnstange und einen Aktor zur Erzeugung eines Rückkopplungsmomentes an der Lenkhandhabe in Abhängigkeit von einer Zahnstangenkraft, wobei das Lenkungssteuergerät derart ausgebildet ist, von einem aufgrund der Daten des Sensors ermittelten Fahrerwunsch mindestens einen Anteil aufgrund des Rückkopplungsmomentes abzuziehen.

Der Erfindung liegt das technische Problem zugrunde, ein steer-by-wire-System zu verbessern sowie ein verbessertes Verfahren zum Betreiben eines steer-by-wire-Systems zur Verfügung zu stellen.

Die Lösung des technischen Problems ergibt sich durch ein steer-by-wire-System mit den Merkmalen des Anspruchs 1 sowie ein Verfahren mit den Merkmalen des Anspruchs 9. Weitere vorteilhafte Ausgestaltungen der Erfindung ergeben sich aus den Unteransprüchen.

Das steer-by-wire-System umfasst eine Lenkhandhabe, einen Sensor zur Erfassung eines Fahrerwunsches, mindestens ein Lenkungssteuergerät, eine Leistungselektronik, einen elektrischen Servo-Motor, eine über den Servo-Motor bewegbare Zahnstange und einen Aktor zur Erzeugung eines Rückkopplungsmoments an der Lenkhandhabe in Abhängigkeit von einer Zahnstangenposition. Aus der Zahnstangenposition kann dann unter Einbeziehung der Achsengeometrie auf die Stellung der Fahrzeugräder geschlossen werden. Von den Daten des Sensors zur Ermittlung eines Fahrerwunsches wird nun mindestens ein Anteil aufgrund des Rückkopplungsmoments abgezogen, um den Lenkwinkel einzustellen. Vorzugsweise ist der Sensor ein Momentensensor, der ein Handmoment an der Lenkhandhabe erfasst. Alternativ kann der Sensor auch ein Drehwinkelsensor sein. Vorzugsweise wird dabei weiter der Anteil aufgrund des Rückkopplungsmoments vollständig abgezogen. Hierdurch wird verhindert, dass es aufgrund des Rückkopplungsmoments zu einem geschlossenen Regelkreis kommt, bei dem das Rückkopplungsmoment wieder als neue Fahrereingabe interpretiert wird.

Weiter ist das Lenkungssteuergerät derart ausgebildet, Anforderungen eines Fahrerassistenzsystems zu erfassen, wobei die Anforderungen einen Lenkwinkel verändern sollen, ohne eine haptische Rückmeldung an der Lenkhandhabe zu erzeugen, wobei Änderungen der Zahnstangenposition aufgrund der Anforderungen bei der Ermittlung des Rückkopplungsmoments abgezogen werden.

Alternativ ist das Lenkungssteuergerät derart ausgebildet, Anforderungen eines Fahrerassistenzsystems zu erfassen, wobei die Anforderungen das Rückkopplungsmoment beeinflussen, wobei deren Anteil vom ermittelten Fahrerwunsch abgezogen wird. Im Extremfall kann die Anforderung des Fahrerassistenzsystems auch ausschließlich in einer haptischen Rückmeldung bestehen, ohne den Lenkwinkel zu beeinflussen (z.B. um ein Vibrieren am Lenkrad zu erzeugen, um die Aufmerksamkeit des Fahrers zu erhöhen).

In einer Ausführungsform erfolgt die Subtraktion des Rückkopplungsmoments vor oder nach einer Lenkkraftunterstützungsermittlung. Vor der Lenkkraftunterstützungsermittlung können sehr einfach Momente abgezogen werden.

Hinsichtlich der verfahrensmäßigen Ausgestaltung der Erfindung wird vollinhaltlich auf die vorangegangenen Ausführungen Bezug genommen.

Die Erfindung wird nachfolgend anhand eines bevorzugten Ausführungsbeispiels näher erläutert. Die Figuren zeigen:
- Fig. 1: ein schematisches Blockschaltbild eines steer-by-wire-Systems in einer ersten Ausführungsform,
- Fig. 2: ein schematisches Blockschaltbild eines steer-by-wire-Systems in einer zweiten Ausführungsform und
- Fig. 3: ein schematisches Blockschaltbild eines steer-by-wire-Systems gemäß dem Stand der Technik.

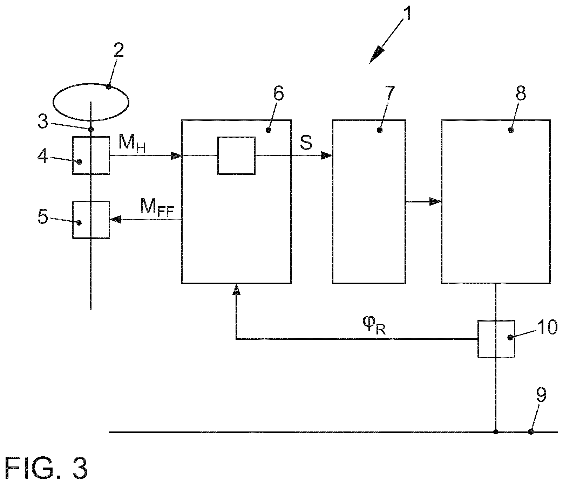

Bevor die Erfindung näher erläutert wird, soll zunächst der Stand der Technik anhand der Fig. 3 näher erläutert werden.

Das steer-by-wire-System 1 umfasst eine Lenkhandhabe 2, die mit einer Eingangswelle 3 verbunden ist. An der Eingangswelle 3 ist ein Momentensensor 4 zur Erfassung eines Handmoments M_{H} des Fahrers angeordnet sowie ein Aktor 5 zur Erzeugung eines Rückkopplungsmoments M_{FF} an der Lenkhandhabe 2. Weiter umfasst das steer-by-wire-System 1 ein Lenkungssteuergerät 6, eine Leistungselektronik 7 und einen elektrischen Servo-Motor 8, der mit einer Zahnstange 9 beispielsweise über ein nicht dargestelltes Kugelkopfgetriebe verbunden ist. Der elektrische Servo-Motor 8 ist mit einem Rotorlagesensor 10 ausgebildet, aus dessen Rotorwinkelsignal ϕ_{R} auf die Zahnstangenposition zurückgerechnet werden kann. In dem Lenkungssteuergerät 6 wird anhand des Handmoments M_{H} und weiterer Eingangsgrößen wie z.B. der Kraftfahrzeuggeschwindigkeit ein Lenkwinkel ermittelt, der durch den Servo-Motor 8 eingestellt werden soll. Hierzu erzeugt das Lenkungssteuergerät 6 ein Stellsignal S für die Leistungselektronik 7. Dabei kann nun das Problem auftreten, dass das Rückkopplungsmoment M_{FF} vom Momentensensor 4 als neue Lenkwunscheingabe erfasst wird, beispielsweise weil der Fahrer kurzzeitig die Hände von der Lenkhandhabe 2 genommen hat. Diese neue Lenkwunscheingabe führt zu einem Zurücklenken in die Neutralstellung, wobei jedoch wieder ein neues Rückkopplungsmoment M_{FF} generiert wird, was wieder zurücklenken würde, d.h. die Lenkung könnte schwingen.

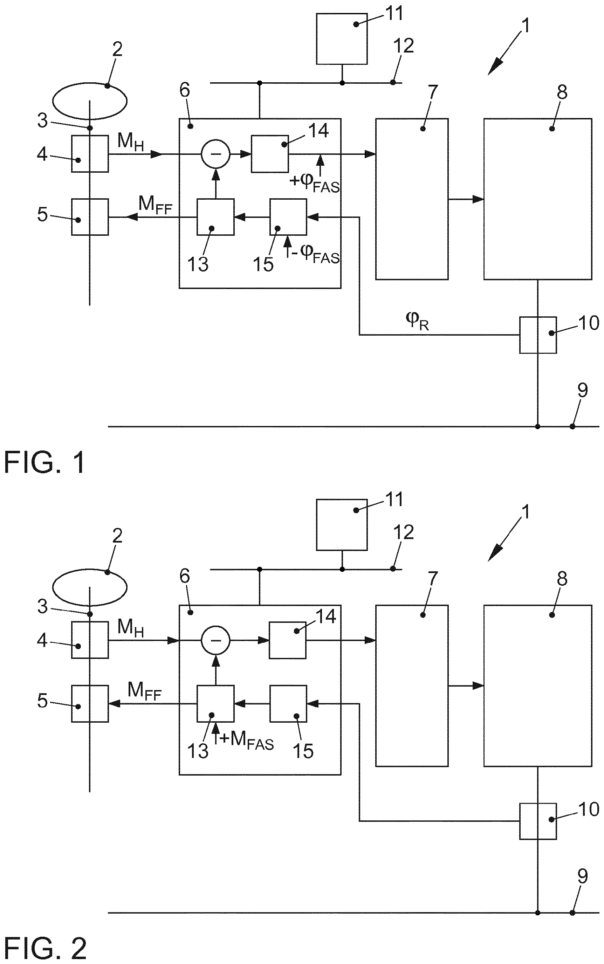

In der Fig. 1 ist ein erfindungsgemäßes steer-by-wire-System 1 dargestellt, wobei gleiche Elemente mit gleichen Bezugszeichen wie in Fig. 3 bezeichnet sind. Dabei ist zusätzlich dargestellt, dass das Lenkungssteuergerät 6 mit mindestens einem Fahrerassistenzsystem 11 über ein Bussystem 12 verbunden ist. Das Lenkungssteuergerät 6 weist ein Modul 13 auf, dass das Rückkopplungsmoment M_{FF} berechnet, das durch den Aktor 5 umgesetzt werden soll. Dieses berechnete Rückkopplungsmoment M_{FF} wird von dem erfassten Handmoment M_{H} abgezogen, wobei dabei eine zeitliche Verzögerung berücksichtigt werden kann. Dieses Moment M_{H}-M_{FF} wird dann einer Lenkunterstützungsfunktion 14 zugeführt. Dabei wird das Rückkopplungsmoment M_{FF} aufgrund der Zahnstangenposition ermittelt, die in einem Modul 15 aus dem Rotorwinkel ϕ_{R} ermittelt wird. Dabei sei weiter angenommen, dass das Fahrerassistenzsystem 11 eine Anforderung FAS generiert, die den Lenkwinkel beeinflussen soll, aber für den Fahrer haptisch nicht spürbar sein soll. In diesem Fall wird dieser zusätzlich gewünschte Lenkwinkel ϕ_{FAS} auf den Ausgang der Lenkunterstützungsfunktion 14 aufaddiert und in dem Modul 15 abgezogen. Somit erhält der Fahrer für diesen Anteil kein haptisches Feedback, was dann auch beim Handmoment M_{H} nicht berücksichtigt werden muss.

In der Fig. 2 ist nun ein steer-by-wire-System 1 dargestellt, wobei das Fahrerassistenzsystem 11 eine Anforderung FAS generiert, die nur ein haptisches Feedback an der Lenkhandhabe 2 erzeugen soll, aber den Lenkwinkel nicht beeinflussen soll. In diesem Fall wird das entsprechende zusätzliche Rückstellmoment M_{FAS} aufaddiert. Gleichzeitig wird dieses zusätzliche Rückstellmoment M_{FAS} vom Handmoment M_{H} im Lenkungssteuergerät 6 abgezogen. Hierdurch wird verhindert, dass es zu einem Schwingen der Lenkung kommen kann, wenn der Fahrer die Hand von der Lenkhandhabe 2 nimmt, da dann ein Handmoment M_{H}=0 an das Lenkungssteuergerät 6 übermittelt wird.

## Patentansprüche

1. Steer-by-wire-System (1), umfassend eine Lenkhandhabe (2), einen Sensor zur Erfassung eines Fahrerwunsches, mindestens ein Lenkungssteuergerät (6), eine Leistungselektronik (7), einen elektrischen Servo-Motor (8), eine über den Servo-Motor (8) bewegbare Zahnstange (9) und einen Aktor (5) zur Erzeugung eines Rückkopplungsmoments (M_{FF}) an der Lenkhandhabe (2), wobei das Lenkungssteuergerät (6) derart ausgebildet ist, von einem aufgrund der Daten des Sensors ermittelten Fahrerwunsch mindestens einen Anteil aufgrund des Rückkopplungsmoments (M_{FF}) abzuziehen,
**dadurch gekennzeichnet, dass**
das Steer-by-wire-System (1) derart ausgebildet ist, das Rückkopplungsmoment (M_{FF}) in Abhängigkeit von einer Zahnstangenposition zu erzeugen, wobei das Lenkungssteuergerät (6) derart ausgebildet ist, Anforderungen (FAS) eines Fahrerassistenzsystems (11) zu erfassen, wobei die Anforderungen (FAS) einen Lenkwinkel verändern sollen, ohne eine haptische Rückmeldung an der Lenkhandhabe zu erzeugen, wobei Änderungen (ϕ_{FAS}) der Zahnstangenposition aufgrund der Anforderungen (FAS) bei der Ermittlung des Rückkopplungsmomentes (M_{FF}) abgezogen werden, oder
das Lenkungssteuergerät (6) derart ausgebildet ist, Anforderungen (FAS) eines Fahrerassistenzsystems (11) zu erfassen, wobei die Anforderungen (FAS) das Rückkopplungsmoment (M_{FF}) beeinflussen, wobei deren Anteil (M_{FAS}) vom ermittelten Fahrerwunsch abgezogen wird.

2. Steer-by-wire-System nach Anspruch 1, **dadurch gekennzeichnet, dass** die Subtraktion vor oder nach einer Lenkkraftunterstützungsfunktion (14) erfolgt.

3. Verfahren zum Betreiben eines steer-by-wire-Systems (1), mittels einer Lenkhandhabe (2), eines Sensors zur Erfassung eines Fahrerwunsches,mindestens eines Lenkungssteuergerätes (6), einer Leistungselektronik (7), eines elektrischen Servo-Motors (8), einer über den Servo-Motor (8) bewegbaren Zahnstange (9) und eines Aktors (5) zur Erzeugung eines Rückkopplungsmoments (M_{FF}) an der Lenkhandhabe (2), wobei von einem aufgrund der Daten des Sensors ermittelten Fahrerwunsch mindestens ein Anteil aufgrund des Rückkopplungsmoments (M_{FF}) abgezogen wird,
**dadurch gekennzeichnet, dass**
das Steer-by-wire-System (1) derart ausgebildet ist, das Rückkopplungsmoment (M_{FF}) in Abhängigkeit von einer Zahnstangenposition zu erzeugen, wobei Anforderungen (FAS) eines Fahrerassistenzsystems (11) erfasst werden, wobei die Anforderungen einen Lenkwinkel verändern, ohne eine haptische Rückmeldung an der Lenkhandhabe (2) zu erzeugen, wobei Änderungen (ϕ_{FAS}) der Zahnstangenposition aufgrund der Anforderungen (FAS) bei der Ermittlung das Rückkoppelmoment (M_{FF}) beeinflussen, wobei deren Anteil (M_{FAS}) vom ermittelten Fahrerwunsch abgezogen wird, oder
Anforderungen (FAS) eines Fahrerassistenzsystems (11) erfasst werden, wobei die Anforderungen (FAS) das Rückkopplungsmoment (M_{FF}) beeinflussen, wobei deren Anteil (M_{FAS}) vom ermittelten Fahrerwunsch abgezogen wird.

4. Verfahren nach Anspruch 3, **dadurch gekennzeichnet, dass** die Subtraktion vor der nach einer Lenkkraftunterstützungsfunktion (14) erfolgt.

## Claims

1. Steer-by-wire system (1), comprising a steering handle (2), a sensor for detecting a driver's request, at least one steering control unit (6), a power electronics unit (7), an electric servomotor (8), a steering rack (9) which can be moved via the servomotor (8), and an actuator (5) for generating a feedback torque (M_{FF}) on the steering handle (2), wherein the steering control unit (6) is designed to subtract, based upon the feedback torque (M_{FF}), at least a fraction from a driver's request determined on the basis of the data of the sensor,
**characterized in that**
the steer-by-wire system (1) is designed to generate the feedback torque (M_{FF}) as a function of a steering rack position, wherein
the steering control unit (6) is designed to detect requirements (FAS) of a driver assistance system (11), wherein the requirements (FAS) are to modify a steering angle without generating haptic feedback on the steering handle, wherein changes (ϕ_{FAS}) in the steering rack position due to the requirements (FAS) are subtracted during the determination of the feedback torque (M_{FF}), or
the steering control unit (6) is designed to detect requirements (FAS) of a driver assistance system (11), wherein the requirements (FAS) influence the feedback torque (M_{FF}), wherein their fraction (M_{FAS}) is subtracted from the determined driver's request.

2. Steer-by-wire system according to claim 1, **characterized in that** the subtraction takes place before or after a steering force support function (14).

3. Method for operating a steer-by-wire system (1) by means of a steering handle (2), a sensor for detecting a driver's request, at least one steering control unit (6), a power electronics unit (7), an electric servomotor (8), a steering rack (9) which can be moved via the servomotor (8), and an actuator (5) for generating a feedback torque (M_{FF}) on the steering handle (2), wherein at least a fraction, based upon the feedback torque (M_{FF}), is subtracted from a driver's request determined on the basis of the data of the sensor,
**characterized in that**
the steer-by-wire system (1) is designed to generate the feedback torque (M_{FF}) as a function of a steering rack position, wherein
requirements (FAS) of a driver assistance system (11) are detected, wherein the requirements modify a steering angle without generating haptic feedback on the steering handle (2), wherein changes (ϕ_{FAS}) in the steering rack position due to the requirements (FAS) influence the feedback torque (M_{FF}) during the determination, wherein their fraction (M_{FAS}) is subtracted from the determined driver's request, or
requirements (FAS) of a driver assistance system (11) are detected, wherein the requirements (FAS) influence the feedback torque (M_{FF}), wherein their fraction (M_{FAS}) is subtracted from the determined driver's request.

4. Method according to claim 3, **characterized in that** the subtraction takes place before the after a steering force support function (14).

## Revendications

1. Système à commande électrique « steer-by-wire » (1), comprenant un système de direction (2), un capteur pour la détection d'un souhait du conducteur, au moins un calculateur de direction (6), une électronique de puissance (7), un servomoteur électrique (8), une crémaillère (9) pouvant être entraînée au moyen du servomoteur (8) et un actionneur (5) pour la génération d'un couple de rétroaction (M_{FF}) au niveau du système de direction (2), le calculateur de direction (6) étant conçu de façon à déduire, sur la base du couple de rétroaction (M_{FF}), au moins une partie du souhait du conducteur déterminé sur la base des données du capteur,
**caractérisé en ce que**
le système à commande électrique « steer-by-wire » (1) est conçu de façon à générer le couple de rétroaction (M_{FF}) en fonction d'une position de la crémaillère,
le calculateur de direction (6) étant conçu de façon à détecter les exigences (FAS) d'un système d'assistance au conducteur (11), les exigences (FAS) devant modifier un angle de direction, sans générer un retour tactile au système de direction, des modifications (ϕ_{FAS}) de la position de crémaillère sur la base des exigences (FAS) étant déduites lors de la détermination du couple de rétroaction (M_{FF}), ou
le calculateur de direction (6) étant conçu de façon à détecter les exigences (FAS) d'un système d'assistance au conducteur (11), les exigences (FAS) influençant le couple de rétroaction (M_{FF}), leur part (M_{FAS}) étant déduite du souhait du conducteur déterminé.

2. Système à commande électrique « steer-by-wire » selon la revendication 1, **caractérisé en ce que** la soustraction est effectuée avant ou après une fonction de direction assistée (14).

3. Procédé de fonctionnement d'un système à commande électrique « steer-by-wire » (1), au moyen d'un système de direction (2), d'un capteur pour la détection d'un souhait du conducteur, d'au moins un calculateur de direction (6), d'une électronique de puissance (7), d'un servomoteur électrique (8), d'une crémaillère (9) pouvant être entraînée au moyen du servomoteur (8) et d'un actionneur (5) pour la génération d'un couple de rétroaction (M_{FF}) au niveau du système de direction (2), au moins une partie du souhait du conducteur déterminé sur la base des données du capteur étant déduite, sur la base du couple de rétroaction (M_{FF}),
**caractérisé en ce que**
le système à commande électrique « steer-by-wire » (1) est conçu de façon à générer le couple de rétroaction (M_{FF}) en fonction d'une position de la crémaillère,
des exigences (FAS) d'un système d'assistance au conducteur (11) étant détectées, les exigences (FAS) modifiant un angle de direction, sans générer un retour tactile au système de direction (2), des modifications (ϕ_{FAS}) de la position de crémaillère sur la base des exigences (FAS) influençant le couple de rétroaction (M_{FF}) lors de sa détermination, leur part étant déduite du souhait du conducteur déterminé, ou
des exigences (FAS) d'un système d'assistance au conducteur (11) étant détectées, les exigences (FAS) influençant le couple de rétroaction (M_{FF}), leur part (M_{FAS}) étant déduite du souhait du conducteur déterminé.

4. Procédé selon la revendication 3, **caractérisé en ce que** la soustraction est effectuée avant l'après une fonction de direction assistée (14).
